Europäisches Patentamt

European Patent Office

Office européen des brevets

(11) Veröffentlichungsnummer: **0 201 666**

**A1**

(12) # EUROPÄISCHE PATENTANMELDUNG

(21) Anmeldenummer: **86101573.3**

(22) Anmeldetag: **07.02.86**

(51) Int. Cl.⁴: **F 16 K 11/00**

(30) Priorität: **15.02.85 DE 3505261**

(43) Veröffentlichungstag der Anmeldung:
**20.11.86  Patentblatt  86/47**

(84) Benannte Vertragsstaaten:
**DE FR IT NL**

(71) Anmelder:  **H.D. Eichelberg & Co GmbH**
**Friedrich-Kirchhoff-Strasse 16**
**D-5860 Iserlohn(DE)**

(72) Erfinder:  **Rüth, Andreas**
**Ulmenweg 8**
**D-5870 Hemer(DE)**

(74) Vertreter:  **Schröter, Martin, Dipl.-Ing.**
**Im Tückwinkel 22**
**D-5860 Iserlohn(DE)**

(54) **Einhebelmischventil.**

(57) Bei einem Einhebelmischventil für sanitäre Anlagen ist
ein flacher Ventilkörper 1 vorgesehen, an dessen Oberseite
die Oberkante eines angeformten Auslaufes 11 ansetzt. In
einem vertieften Gewindeabsatz 14 im Ventilkörper 1 ist ein
in den Ventilkörper eingreifendes Abdeckgehäuse 2 eingeschraubt, mit dem eine Steuerscheibenkartusche 4 gegen
eine Sitzfläche 12 im Ventilkörper 1 gezogen ist.

EP 0 201 666 A1

0201666

- 1 -

Die Erfindung betrifft ein Einhebelmischventil für sanitäre Anlagen, bei dem eine Steuerscheibenkartusche gegen einen vertieften Absatz an einem flachen Ventilkörper, an dessen Oberseite die Oberkante eines angeformten Auslaufes ansetzt, mit einer Schraubverbindung gezogen ist und die Steuerscheibenkartusche von außen mit einem in den Absatz am Ventilkörper eingreifenden Abdeckgehäuse abgedeckt ist.

Es ist ein derartiges Ventil bekannt (Produktinformation 1983 der Firma Friedrich Grohe GmbH & Co., 5870 Hemer), bei dem am flachen Ventilkörper, an dessen Oberseite die Oberkante eines angeformten Auslaufes ansetzt, eine Steuerscheibenkartusche gegen einen vertieften Absatz mit mehreren Schrauben gezogen ist, die durch seitliche Bohrungen im Kartuschengehäuse hindurchgeführt sind. Auf diese Anordnung der Kartusche am Körper ist zur Abdeckung von außen ein hülsenförmiges Abdeckgehäuse aufgesteckt, welches in den Absatz am Körper eingreift. Aus dem Abdeckgehäuse ragt ein mit der Steuerscheibe der Kartusche verbundener Hebel heraus, auf den der Mischerkopf mit seinem Bedienungshebel schwenkbar aufgesetzt ist.

Dieser bekannte Aufbau eines Einhebelmischventiles bietet herstellungstechnische Vorteile, insbesondere im Hinblick auf die notwendigen Schleif- und Polierbearbeitungen des flachen Körper mit dem abstehend angeformten Auslauf. Abdeckgehäuse und Ventilkörper lassen sich in getrennten Behandlungen in einfacher Weise schleifen und polieren als dies bei Ventilkörpern mit angeformten oberen zylindrischen Abschnitt möglich ist. Ebenso ist es bei einer solchen Konstruktion einfacher, zweifarbig gestaltete Mischventile herzustellen.

Als nachteilig bei der bekannten vorherbeschriebenen Einhebelmischventilkonstruktion erweist sich die Befestigung der Steuerscheibenanordnung bzw. der Kartusche. Dazu müssen drei Schrauben durch die Kartusche hindurchgezogen und in die Sitzfläche am Ventilkörper eingeschraubt werden. Danach ist das Abdeckgehäuse aufzustecken, welches dann gegen eine Verschiebung in Achsrichtung zu sichern ist oder bei einfacher Einsteckbefestigung relativ ungesichert bleibt.

Die Aufgabe der Erfindung besteht darin, die Konstruktion eines Einhebelmischventiles nach dem Oberbegriff des Anspruches 1 zu vereinfachen und das Abdeckgehäuse sicher zu befestigen.

Gelöst wird die Erfindungsaufgabe an dem genannten Einhebemischventil, welches gekennzeichnet ist durch ein Abdeckgehäuse, welches in einem Gewindeabsatz im Ventilkörper eingeschraubt ist und die Steuerscheibenkartusche gegen die Sitzfläche am Ventilkörper zieht.

Bei dieser erfindungsgemäßen Konstruktion entfällt die spezielle Befestigung der Steuerscheibenanordnung bzw. der Kartusche. Die Kartusche wird beim Einschrauben des Abdeckgehäuses in den Ventilkörper direkt gegen ihre Sitzfläche am Ventilkörper klemmend gezogen. Sowohl bei der Montage als auch bei der Demontage ist lediglich das Oberteil einzuschrauben bzw. abzuschrauben.

Nach einer bevorzugten Ausführungsart der Erfindung ist innen an einem oberen Abschnitt des Abdeckgehäuses ein Absatz gebildet, an dem ein gegen die Steuerscheibenkartusche wirkender Druckring anliegt. Auf besonders einfache Weise wird damit die Steuerscheibenanordnung, insbesondere eine die Keramikscheiben aufnehmende Steuerkartusche, von dem Abdeckgehäuse gegen ihre Sitzfläche am Ventilkörper gezogen.

Zur Erfindung gehört auch der Vorschlag, den oberen Abschnitt des Abdeckgehäuses außen nach oben hin konisch zu verjügen. Damit ergibt sich ein relativ großer Schwenkbereich für einen das Abdeckgehäuse übergreifenden Mischerkopf. Außerdem wird eine relativ schmale Ausführung des Abdeckgehäuses erreicht.

Anhand eines abgebildeten ·Ausführungsbeispieles wird die Erfindung im folgenden näher erläutert.

In einer teilweisen Schnittdarstellung ist ein Einhebelmischventil für sanitäre Anlagen gezeigt.

An dem für eine Einlochbefestigung ausgestalteten flachen Ventilkörper 1 ist der Auslauf 11 seitlich angeformt. Mit der Ziffer 13 ist eine zum Auslauf führende Bohrung in der Sitzfläche 12 des Ventilkörpers bezeichnet. Die Zulaufbohrungen sind in dieser Schnittdarstellung nicht erkennbar.

An der Oberseite des Ventilkörpers ist ein Absatz mit einem Innengewinde 14 ausgebildet, in den das zylindrische Abdeckgehäuse 2 mit seinem Gewindeabschnitt 21 eingeschraubt ist. Dieses Abdeckgehäuse 2 umschließt die insgesamt mit der Ziffer 4 bezeichnete Kartusche einer Steuerscheibenanordnung. Die beiden Keramikscheiben sind mit der Ziffer 41 und 42 bezeichnet. Ein oben auf der Kartusche 4 aufgesetzter Druckring 3 wird von dem Absatz 22 im Inneren des oberen Abschnittes 23 des Abdeckgehäuses 2 auf die Kartusche gedrückt und preßt damit beim Anziehen des eingeschraubten Abdeckgehäuses 2 die Kartusche 4 mit ihrer Unterseite gegen die Sitzfläche 12 im Ventilkörper, wobei die entsprechenden Bohrungen übereinanderliegen.

Der obere Abschnitt 23 des Abdeckgehäuses 2 verjüngt sich außen nach oben hin konisch. Dieser Abschnitt wird übergriffen von dem mit der Ziffer 5 bezeichneten Mischerkopf, an dem außen ein Hebel 51 angesetzt ist.

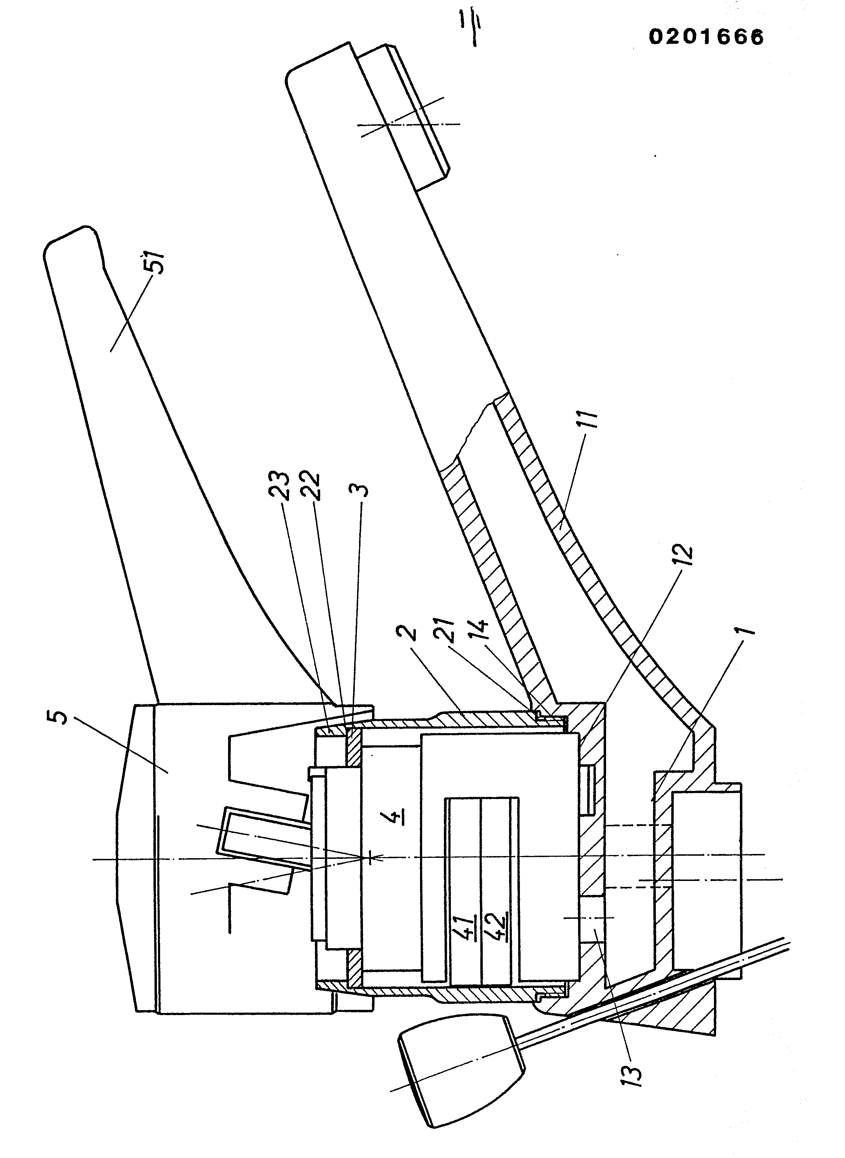

Patentansprüche

1. Einhebelmischventil für sanitäre Anlagen, bei dem eine Steuerscheibenkartusche gegen einen vertieften Absatz an einem flachen Ventilkörper, an dessen Oberseite die Oberkante eines angeformten Auslaufes ansetzt, mit einer Schrauverbindung gezogen ist und die Steuerscheibenkartusche von außen mit einem in den Absatz am Ventilkörper eingreifenden Abdeckgehäuse abgedeckt ist, gekennzeichnet durch ein Abdeckgehäuse (2), welches in einen Gewindeabsatz (14) im Ventilkörper (1) eingeschraubt ist und die Steuerscheibenkartusche (4) gegen die Sitzfläche (12) am Ventilkörper (1) zieht.

2. Ventil nach Anspruch 1, dadurch gekennzeichnet, daß innen an einem oberen Abschnitt (23) des Abdeckgehäuses (2) ein Absatz (22) gebildet ist, an dem ein gegen die Steuerscheibenkartusche (4) wirkender Druckring (3) anliegt.

3. Ventil nach Anspruch 1, dadurch gekennzeichnet, daß sich der obere Abschnitt (23) des Abdeckgehäuses (2) außen nach oben hin konisch verjüngt.

0201666

**Europäisches Patentamt**

## EUROPÄISCHER RECHERCHENBERICHT

| EINSCHLÄGIGE DOKUMENTE | | | EP 86101573.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 112 614 (IDEAL-STANDARD GMBH)<br><br>* Seite 6, Zeilen 22-28; Fig. *<br><br>-- | 1 | F 16 K 11/00 |
| Y | DE - A1 - 3 023 939 (IDEAL-STANDARD GMBH)<br><br>* Fig. 1 *<br><br>-- | 1,2 | |
| Y | GB - A - 2 112 113 (MORA ARMATUREN-FABRIK AB)<br><br>* Fig. 1 *<br><br>---- | 1,2 | |

| | | | RECHERCHIERTE SACHGEBIETE (Int. Cl.4) |
|---|---|---|---|
| | | | F 16 K 11/00<br>F 16 K 27/00 |

Der vorliegende Recherchenbericht wurde für alle Patentansprüche erstellt.

| Recherchenort | Abschlußdatum der Recherche | Prüfer |
|---|---|---|
| WIEN | 25-08-1986 | ROUSSARIAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82